# EUROPEAN PATENT APPLICATION

(11) **EP 3 462 678 A1**
(43) Date of publication of application: **03.04.2019**
(21) Application number: 17194059.6
(22) Date of filing: 29.09.2017
(51) Int. Cl.: H04L 12/28, H04N 21/61, H04N 21/222, H04N 21/40, H04N 21/4402

(54) **CABLE MODEM WITH EMBEDDED VIDEO TRANSMITTER**

(71) Applicant: INTEL Corporation, Santa Clara, CA 95054 (US)
(72) Inventor: SHULMAN, Shaul, 5257207 Ramat Gan (IL); HERMESH, Barak, M 37000 Pardes Hana (IL); PRIEV, Avi, M 49527 Petach-Tikva (IL); KVETNY, Eddy, M 7570047 Rishon-Lezion (IL); KLIMKER, Amos, 6800224 Tel-Aviv (IL)
(74) Representative: 2SPL Patentanwälte PartG mbB

(57) **Abstract**

A cable modem with an embedded video transmitter for supporting all-IP end-to-end services in a cable network (120) is disclosed. A cable modem is provided with a video converter/modulator feature. The cable modem receives Internet protocol (IP) packets carrying video streams from a network. A video extractor in the cable modem extracts video packets from the IP packets, and a video modulator in the cable modem modulates the extracted video packets per video format supported by a customer premise equipment (CPE) (132, 134). The cable modem then sends the modulated video packets to the CPE (132, 134). With this feature, all-IP end-to-end services may be implemented without being dependent on an existing CPE's capability for supporting IP at the customer premises (132, 134).

## Description

### Field

Examples relate to an apparatus, a device, a software program, and a method for video transmission. More particularly, examples related to a cable modem with an embedded video transmitter.

### Background

Network operators (e.g. multiple systems operators (MSOs)) have deployed millions of digital set-top boxes for providing TV and video broadcast and interactive video services to subscribers. The MSOs deployed millions of Data Over Cable Service Interface Specification (DOCSIS) cable modems with the associated infrastructure. DOCSIS is an international standard that permits transmission of wide bandwidth data transfer via an existing cable network (i.e. a co-axial network or a hybrid fiber-coaxial (HFC) network).

Industries have been moving towards all-Internet protocol (IP) end-to-end services and the MSO infrastructures have been updated to support the all-IP services. However, one of the biggest barriers for migration of the last-mile access (i.e. the final leg of the communication network that delivers services to customers) to all-IP services is the need to replace the existing set-top boxes (STBs) in the customers' premises since the majority of the STBs in the customers' premises do not support IP.

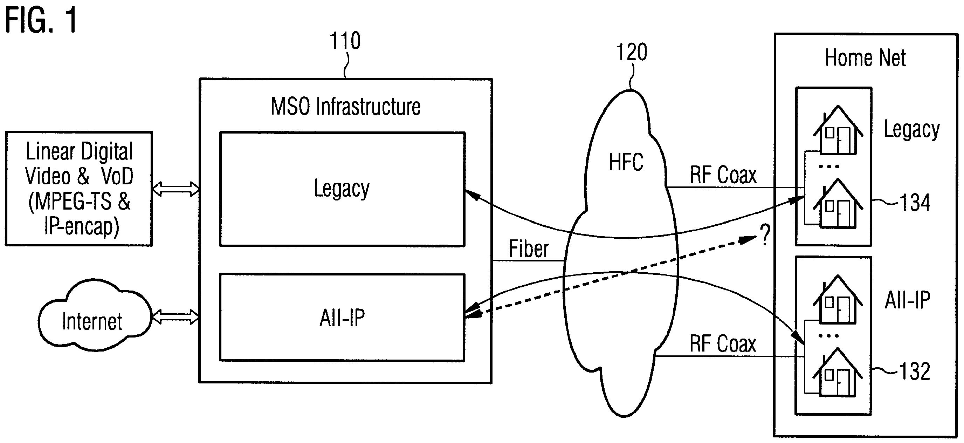

Fig. 1 depicts the afore-mentioned problems for implementing the all-IP end-to-end services in a conventional system. Digital video, video on-demand (VOD), and Internet services may be provided to the subscribers via an MSO infrastructure 110 and a cable network 120. For the customers 132 with customer premise equipments (CPEs) that support IP, the services may be provided via IP over the MSO infrastructure 110 and the cable network 120. However, for the customers 134 with CPEs that do not support IP, the services cannot be provided over IP but by using the conventional non-IP technologies.

In order to support all-IP end-to-end services, the STBs at the customers' premises may be replaced with the ones that support IP. However, replacing all the STBs in the customers' premises is an operational challenge for the MSO due to increased expenses.

### Brief description of the Figures

Some examples of apparatuses and/or methods will be described in the following by way of example only, and with reference to the accompanying figures, in which
Fig. 1 depicts problems for implementing all-IP end-to-end services in a conventional system;
Fig. 2 shows an example of a network enabling all-IP end-to-end services for subscribers who are all-IP ready and subscribers having a STP that does not support IP;
Fig. 3 shows an example of a processing of IP video packets in the cable modem;
Fig. 4 shows an example of transmission of out-of-band (OOB) messages in case where the cable modem and the STB support DOCSIS Set-top Gateway (DSG);
Fig. 5 shows an example structure of a cable modem;
Fig. 6 shows an example structure of an analog front end (AFE) in the cable modem for a DOCSIS radio frequency (RF) co-axial system;
Fig. 7 shows an example structure of an AFE in the cable modem for a DOCSIS passive optical network (PON) system;
Fig. 8 shows an example structure of a processor in the cable modem for a DOCSIS RF co-axial system; and
Fig. 9 shows an example structure of a processor in the cable modem for a DOCSIS PON system.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are provided to enable an MSO to migrate to all-IP network (including the "last mile" segment) without being dependent on an existing CPE's capability for supporting IP at the customer premises.

In the examples, a cable modem is provided with a capability of converting digital video streams from the DOCSIS all-IP to the format compatible with the home co-axial network technology, e.g. using the conventional cable quadrature amplitude modulation (QAM) modulation. The examples will also enable VoD IP services over the home cable with a STB that does not support IP.

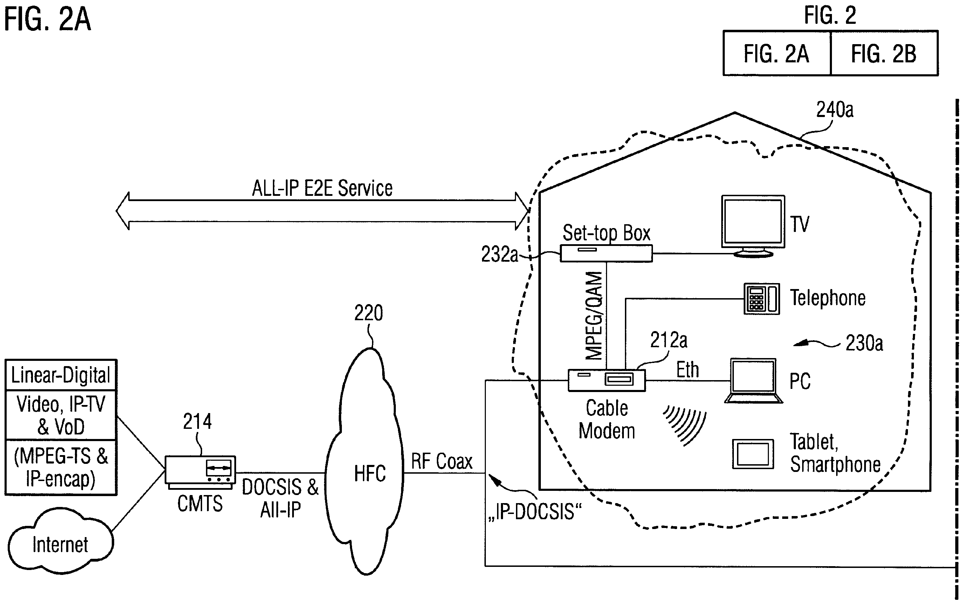

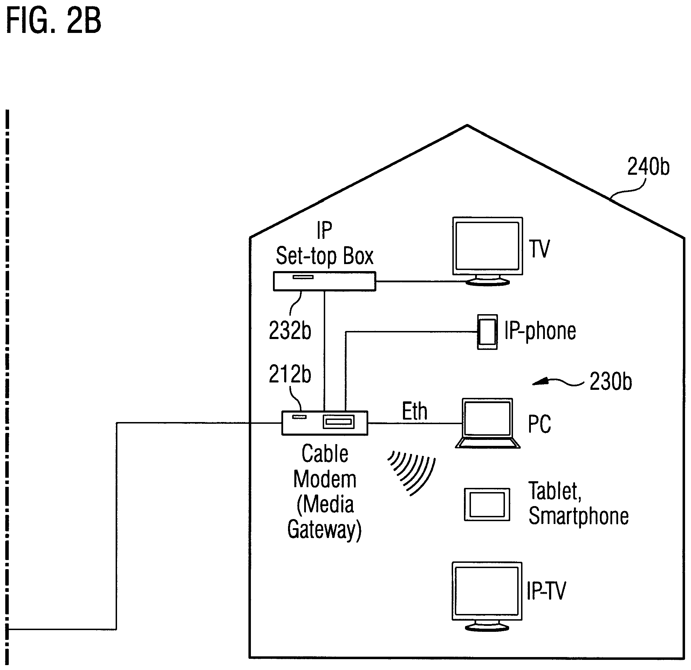

Fig. 2 shows an example of a network enabling all-IP end-to-end services for subscribers who are all-IP ready and who have a STP that does not support IP (e.g. the conventional QAM-based STBs or residential gateways). The MSO infrastructure (e.g. a DOCSIS network) includes two primary components: a cable modem 212a, 212b and a cable modem termination system (CMTS) 214 that are connected via a cable network 220. The cable modem 212a, 212b is located at or near the customer premises and the CMTS 214 is located at the cable TV (CATV) network headend. The cable network 220 may be a co-axial network or an HFC network. The fiber optic lines in the HFC network transport digital signals to nodes in the system where the digital signals are converted into radio frequency (RF) channels and modem signals on the co-axial lines.

The cable modem 212a, 212b connects to the cable network 220 at one end and to a home network 230a, 230b at the other end, bridging packets between the cable network 220 and the home network 230a, 230b. CPEs are connected to the cable modem 212a, 212b via the home network 230a, 230b either wirelessly (e.g. WiFi, Bluetooth®, etc.) or via a wire (e.g. Ethernet, etc.). CPEs may be embedded within the cable modem 212a, 212b in a single device or may be separate standalone devices. CPEs may use IP version 4 (IPv4), IP version 6 (IPv6) or both forms of IP addressing. Examples of CPEs are a home router, a STB, a home gateway, a personal computer, a laptop computer, a tablet, a smartphone, a telephone, an IP TV, an IP phone, or the like.

The CMTS 214 connects the operator's core network with the cable network 220. A main function of the CMTS 214 is to forward packets between the operator's core network and the cable network 220 and between upstream and downstream channels on the cable network 220.

In examples, a downstream IP traffic (e.g. digital video, IP TV, IP telephony, VoD, video gaming, Internet, etc.) is transported using IP (e.g. IP/DOCSIS protocol) via the CMTS 214 to the cable modem 212a, 212b over the cable network 220. The IP traffic can be transported to the CPEs supporting IP over a home network 230a, 230b. For example, at the customer's premise 240b, the STB 232b supports IP so that the IP traffic may be directly transferred to the STB 232b. At the customer's premise 240a, the STB 232a does not support IP and the IP traffic cannot be directly transmitted to the STB 232a.

In the examples, the cable modem 212a that receives broadcast, multicast, or unicast IP video streams from the DOCSIS network over IP extracts video packets from the IP video streams, converts the video packets per video format supported by the STB 232a (e.g. modulating the extracted video packets per any version (currently existing or that may be developed in the future) of International Telecommunication Union-Telecommunication (ITU-T) J.83 Recommendation) and transmits the converted video streams to the STB 232a, which is connected to another CPE such as a TV. This feature saves the need to replace the existing non-IP supporting STBs in the customers' premises in implementing the all-IP end-to-end services.

In examples, a video converter/modulator feature is added to the cable modem 212a. For example, a processor within the cable modem 212a may extract the video streams (e.g. Motion Picture Expert Group (MPEG) streams) from the IP packets received through DOCSIS medium access control (MAC) and physical layer (PHY) processing components. For example, extracted video channels from the IP packets may be grouped into MPEG streams based on software configuration accessible and programmable by the MSO through a management channel to the DOCSIS cable modem, and the video streams may be modulated per J.83A/B/C/D video format. A digital bit stream that includes all channels in their respective RF frequencies is sent to the AFE in the cable modem 212a. A wideband digital-to-analog converter (DAC) in the AFE converts these signals to analog signals and sends them over an RF port of the cable modem 212a that connects to the home co-ax wiring to which the STB 232a is connected.

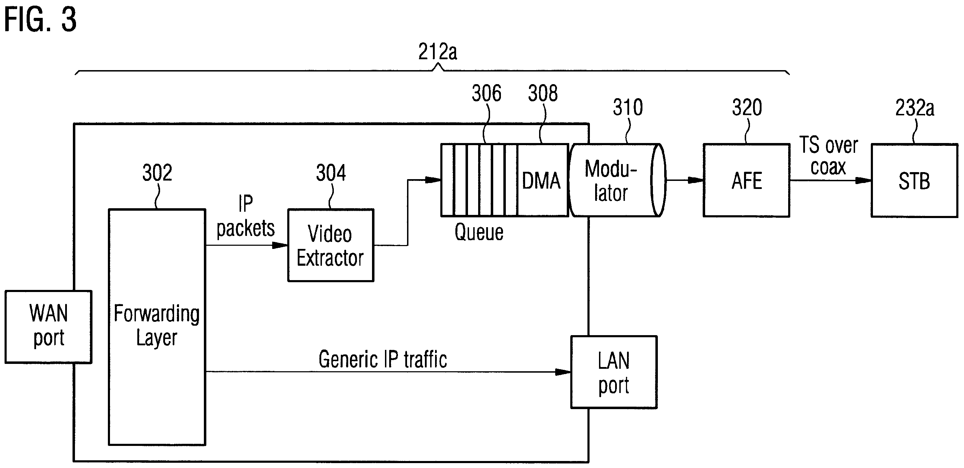

Fig. 3 shows an example of processing of IP packets in the cable modem 212a. A network (e.g. a content delivery network (CDN)) sends IP packets carrying video packets (referred to as "IP video packets") towards a cable modem 212a at the customer premise. The video packets may be encoded according to any version (currently existing or that may be developed in the future) of the MPEG standards (such as MPEG-2, MPEG-4, etc.), or any other video encoding standards. The IP video packets may be received at the cable modem 212a together with generic Internet traffic sent to the consumer's devices. A forwarding function 302 (e.g. a router, a bridge, or a hybrid) in the cable modem 212a detects IP video flows based on the header fields of the IP packets and forwards the IP video packets to a video extractor 304. The video extractor 304 reads the IP video packets and breaks them into video packets (e.g. MPEG packets). A single IP packet may contain several video packets. The extracted video packets may be pushed into a queue 306 in order. The queue 306 absorbs bursts of video packets as the WAN network (i.e. the cable modem input) is typically much faster than traffic stream over co-ax (i.e. the cable modem output). A direct memory access (DMA) 308 may read the video packets from the queue 306 and push them to a modulator 310 (e.g. an MPEG modulator) which modulates the video packets per video format (e.g. ITU-T J.83) supported by the CPE (e.g. the STB 232a). The modulated samples of the video packets may be sent over a serializer/deserializer (serdes) to the AFE 320. The AFE 320 then converts the modulated samples to analog signals and sends to the CPE 232a over a co-ax line.

Control messages and information messages, (e.g. that are conventionally referred to as out-of-band (OOB) messages), are transmitted between a CPE (e.g. a STB) and a network (e.g. a set-top controller, an application server, etc.) in both upstream and downstream. Downstream OOB messages include conditional access information, system information, electronic program guide, emergency alert system information, STB command and control messages, or the like. Upstream OOB messages are used for interactive services, or the like. The term "OOB" means that the control and information messages are transmitted using a dedicated channel for signaling which is separate from the channel for transmitting video signals. The examples will be explained with reference to OOB messaging, but the examples may be applied to the case of in-band signaling of the control and information messages.

In examples, an OOB transmitter and an OOB receiver (e.g. a transmitter and a receiver supporting any version (currently existing or that may be developed in the future) of Society of Cable Telecommunications Engineers (SCTE)-55-1 and/or SCTE-55-2 standards) may be incorporated in the cable modem 212a for transporting the OOB signaling to and from the STB 232a.

In one example, the OOB signaling may pass through the cable modem 212a. In case where the cable network 220 is all co-axial, the OOB signaling may be transferred using a physical connection between the WAN coax port and the LAN coax port of the cable modem 212a so that the RF OOB channel reaches the STB 232a.

In another example, OOB messages may be converted to a dedicated signaling channel over IP at the cable modem 212a. Upstream OOB messages from the STB 232a may be converted to IP packets at the cable modem 212a and sent to the network over DOCSIS/IP. Downstream OOB messages received by the cable modem 212a over DOCSIS/IP may be converted to conventional OOB signaling at the cable modem 212a and transmitted to the STB 232a. A protocol terminator may be implemented at the operator network device (e.g. a CDN).

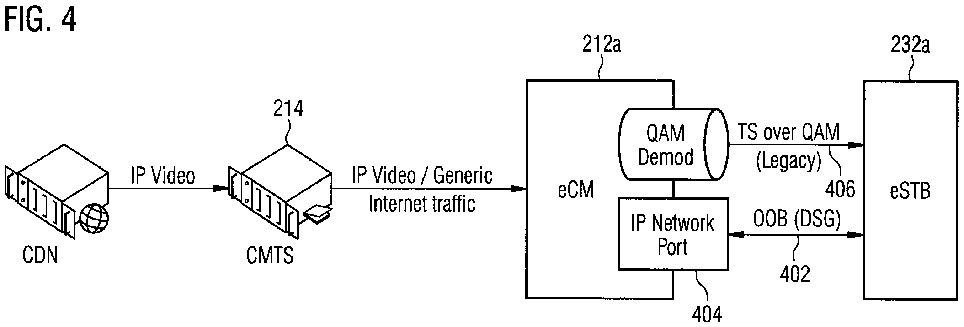

In another example, in case of DOCSIS Set-top Gateway (DSG), the OOB messages may be sent over IP to the STB 232a via the cable modem 212a using an IP network interface. DSG allows the DOCSIS transport to be used for OOB signaling. Fig. 4 shows an example of transmission of OOB messages in case where both the cable modem 212a and the STB 232a support DSG (any version (currently existing or that may be developed in the future) of DSG). eCM and eSTB are a cable modem and a STB including DSG functionalities, respectively. As shown in Fig. 4, the OOB messages 402 are carried over IP to the STB 232a via the IP network port 404 of the cable modem 212a. In parallel to the OOB messaging, the video traffic is converted and sent over the conventional video stream (e.g. the traffic stream 406 over the conventional QAM modulation) as explained above.

The channel selection is managed by the network device. The network device may send a command through a management channel to the gateway that instructs the gateway which IP stream to convert to MPEG. The STB requests are received by the network device through the OOB signaling which is bridged over IP.

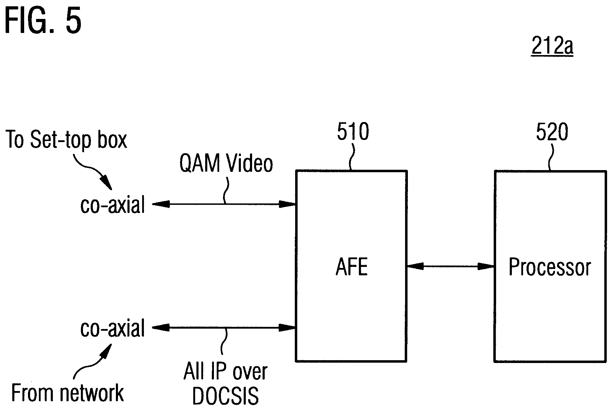

Fig. 5 shows an example structure of the cable modem 212a. The cable modem 212a may include an AFE 510 and a processor 520 (e.g. a system on chip (SoC)). The AFE 510 and the processor 520 may be separate devices or may be integrated in a single device. IP packets transmitted from the network over DOCSIS are received by the AFE 510 and processed by the processor 520. Video packets (e.g. MPEG packets) are extracted from the IP packets and modulated by the processor 520 in a format supported by the STB 232a and transmitted to the STB 232a via the AFE 510. In one example, downstream OOB messages transmitted from the network over IP and DOCSIS are received by the AFE 510 and may be processed and converted by the processor 520 in a format supported by the STB 232a and transmitted to the STB 232a via the AFE 510. Alternatively, the downstream OOB messages may pass through the cable modem 212a, or transported via DSG. In one example, upstream OOB signaling from the STB 232a are received by the AFE 510 and may be converted to IP packets by the processor 520 and transmitted to the network via DOCSIS/IP. Alternatively, the upstream OOB messages may pass through the cable modem 212a, or transported via DSG.

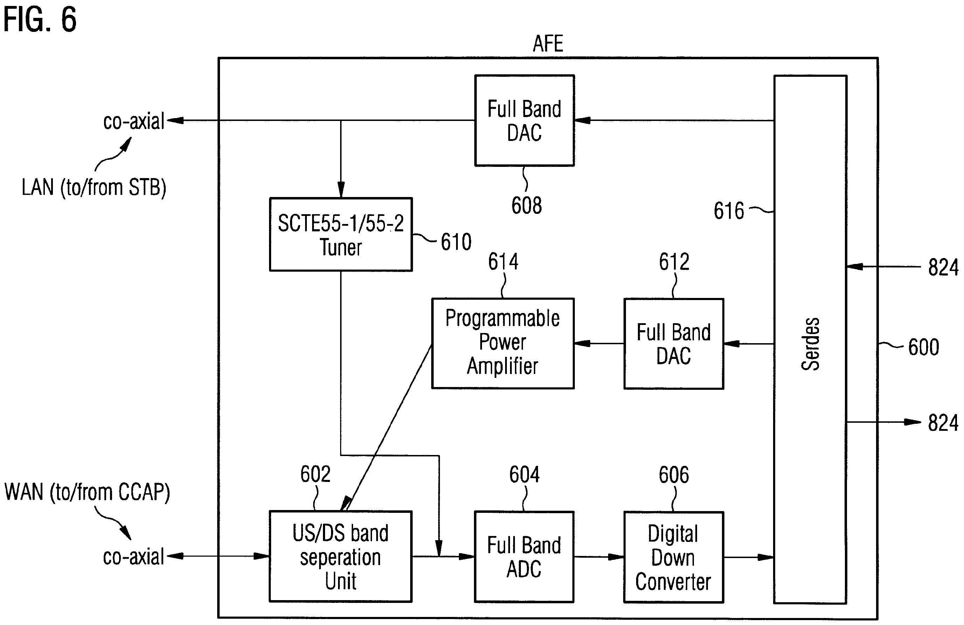

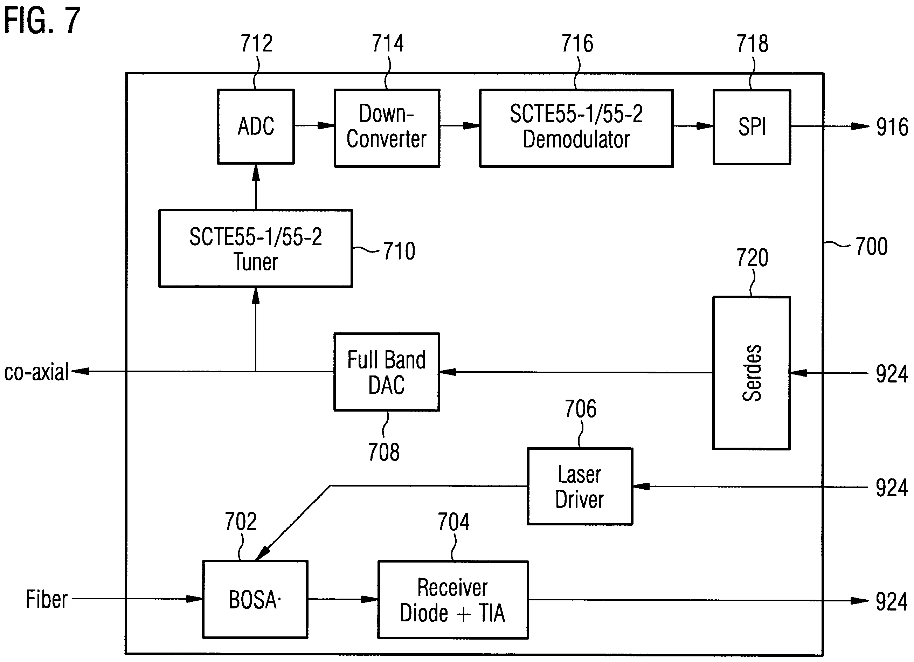

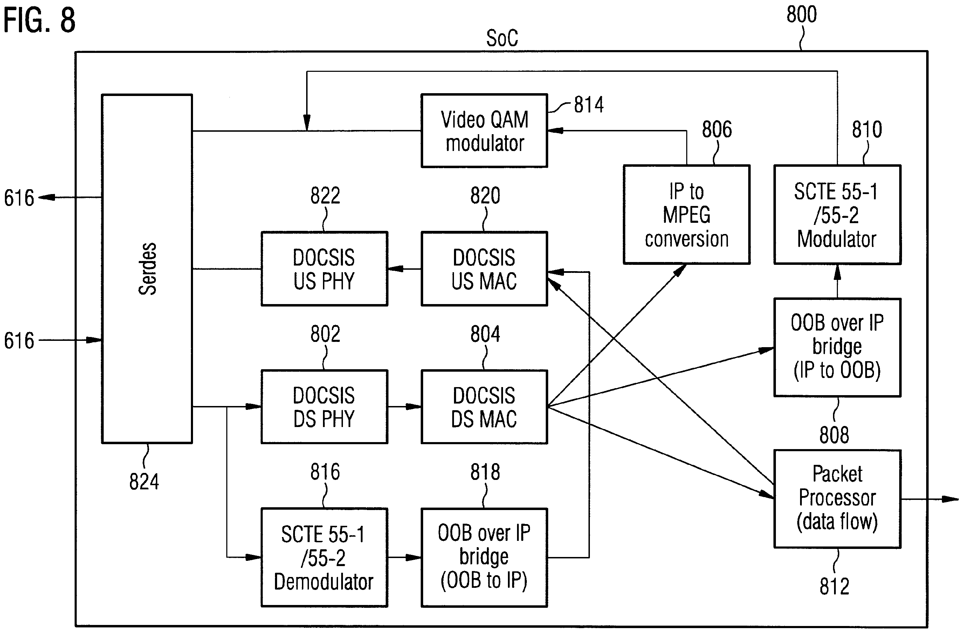

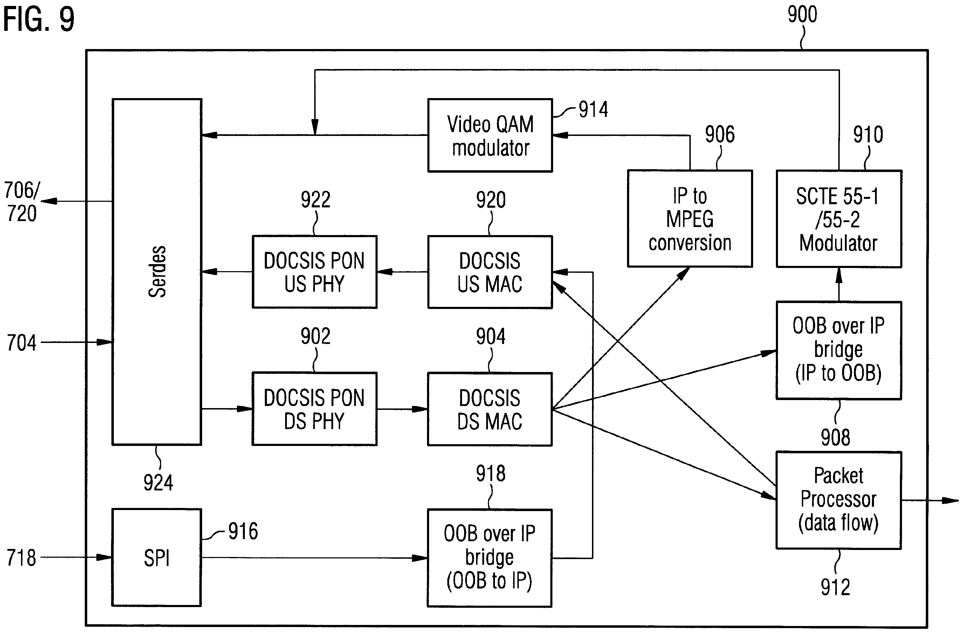

Example implementations of the AFE 510 and the processor 520 of the cable modem are explained with reference to Figs. 6-9 below. Fig. 6 shows an example structure of an AFE 600 for a DOCSIS RF co-axial system. Fig. 7 shows an example structure of an AFE 700 for a DOCSIS PON system. Fig. 8 shows an example structure of a processor 800 for a DOCSIS RF co-axial system. Fig. 9 shows an example structure of a processor in the cable modem for a DOCSIS PON system. It should be noted that the structures shown in Figs. 6-9 are provided as examples, and some functional units included in the AFE 600, 700 may be placed in the processor 800, 900, and vice versa. It should also be noted that the components of the AFE 600, 700 and the processor 800,900 will be explained with reference to MPEG, ITU-T J.83, and SCTE 55-1/55-2 standards/recommendations as an example, but may be applied to different standards or protocols as well.

Referring to Fig. 6, the AFE 600 receives downstream (DS) signals from the network, or transmits upstream (US) signals to the network, via a WAN port. The received downstream signals are forwarded by the US/DS band separation unit 602 to the ADC 604. The ADC 604 converts the received downstream signals to digital signals and the digital signals are downconverted by the downconverter 606. Complex baseband samples output from the downconverter 606 are then sent to the processor 800 via the serdes 616.

Referring to Fig. 8, the complex baseband samples of the downstream signals sent from the AFE 600 are received via the serdes 824 and processed by the DOCSIS physical layer (PHY) processing component 802 and the DOCSIS MAC processing component 804 to recover IP packets. The IP packets are then processed by different processing components depending on the payload that the IP packets carry. IP packets carrying MPEG packets are forwarded to the IP-to-MPEG conversion unit 806 for extracting MPEG packets from the IP packets. The extracted MPEG packets may be modulated by the video QAM modulator 814 per ITU-T J.83 Recommendation.

For downstream OOB signaling, an SCTE 55-1/55-2 modulator 810 may be included in the processor 800. Downstream OOB messages are extracted from the IP packets by the OOB-over-IP bridge 808 (i.e. IP-to-OOB conversion), and the extracted downstream OOB messages are then modulated by the SCTE 55-1/55-2 modulator 810 per SCTE 55-1/55-2 standards (i.e. the OOB messages are modulated digitally along with the video QAM channels). The modulated real samples of the MPEG packets and the downstream OOB messages are sent to the AFE 600 via the serdes 824. Generic IP packets are processed by a packet processor 812. Referring to Fig. 6, the modulated real samples of the MPEG packets and the downstream OOB messages from the processor 800 are received via the serdes 616 and then converted to analog signals by the DAC 608 and then transmitted to the STB 232a via a LAN port.

For upstream OOB signaling, an SCTE 55-1/55-2 tuner may be included in the AFE 600. Referring to Fig. 6, the upstream OOB signaling from the STB 232a is received by the SCTE 55-1/55-2 tuner 610 and converted to a digital signal by the ADC 604 and then downconverted by the digital down-converter 606. The complex baseband samples of the upstream OOB signaling are then sent to the processor 808 via the serdes 616. Referring to Fig. 8, an SCTE 55-1/55-2 demodulator 816 in the processor 800 receives the complex baseband samples of the upstream OOB signaling via the serdes 824 and extracts the OOB messages from the received complex baseband samples of the upstream OOB signaling. The extracted OOB messages are converted to IP packets by the OOB-over-IP bridge 818 (i.e. OOB-to-IP conversion) for transport to the network headend over DOCSIS IP link. The IP packets carrying the OOB messages are processed by the DOCSIS upstream MAC and PHY processing components 820, 822 and the modulated real samples are sent to the AFE 600 via the serdes 824. Referring to Fig. 6, the modulated real samples are converted to analog signals by the DAC 612 and then amplified by the programmable power amplifier 614 and then transmitted to the headend in the network via the US/DS band separation unit 602 and the WAN port.

Referring to Fig. 7, in case of DOCSIS PON system, the downstream signals via an optical fiber are received by the bi-directional optical sub-assembly (BOSA) 702 and converted to an electrical signal by a receive diode and a transimpedance amplifier (TIA) 704. The downstream signals are sent to the processor 900.

Referring to Fig. 9, the downstream signals received via the serdes 924 are processed by the DOCSIS PON DS PHY processing component 902 and the DOCSIS DS MAC processing component 904 in the processor 900 to recover IP packets. The IP packets are then processed by different components depending on the payload that the IP packets carry. IP packets carrying MPEG packets are forwarded to the IP-to-MPEG conversion unit 906 for extracting MPEG packets from the IP packets. The extracted MPEG packets may be modulated by the video QAM modulator 914 per ITU-T J.83 Recommendation.

Downstream OOB messages are extracted from the IP packets by the OOB-over-IP bridge 908 (i.e. IP-to-OOB conversion), and then modulated by the SCTE 55-1/55-2 modulator 910 per SCTE 55-1/5592 standards (i.e. the OOB messages are modulated digitally along with the video QAM channels). The modulated real samples of the MPEG packets and the downstream OOB messages are sent to the AFE 700 via the serdes 924. Generic IP packets are processed by a packet processor 912. Referring to Fig. 7, the modulated real samples of the MPEG packets and the downstream OOB messages received from the processor 900 via the serdes 720 are converted to analog signals by the DAC 708 and then transmitted to the STB 232a.

For upstream OOB signaling, an SCTE 55-1/55-2 tuner 710 is included in the AFE 700. Referring to Fig. 7, the upstream OOB signaling from the STB 232a is received by the SCTE 55-1/55-2 tuner 710, and converted to a digital signal by the ADC 712, and then downconverted by the down-converter 714. The complex baseband samples of the upstream OOB signaling may be demodulated by the SCTE 55-1/55-2 demodulator 716 to extract the upstream OOB messages. The SCTE 55-1/55-2 demodulator 716 may be included in the processor 900. The upstream OOB messages may be passed to the processor 900 via the serial peripheral interface (SPI) interface 718. The SPI interface 718 is a control interface between the AFE 700 and the processor 900 (when these are implemented as separate ICs). The AFE 700 may be configured by a software running on the processor 900 that is also managing the protocols between the gateway (e.g. a cable modem) and the headend.

Referring to Fig. 9, the upstream OOB messages received via the SPI interface 916 are converted to IP packets by the OOB-over-IP bridge 918 (i.e. OOB-to-IP conversion) for transport to the network headend over DOCSIS IP link. The IP packets carrying the OOB messages are processed by the DOCSIS upstream MAC processing component 920 and the DOCSIS PON US PHY processing component 922 and then sent to the AFE 700 via the serdes 924. Referring to Fig. 7, the IP packets carrying the upstream OOB messages are transmitted to the headend in the network by the laser diode 706 and the BOSA 702.

Another example is a computer program having a program code for performing at least one of the methods described herein, wherein the computer program is executed on a computer, a processor, a programmable hardware component, or the like. Another example is a machine-readable storage including machine readable instructions, when executed, to implement a method or realize an apparatus as described herein. A further example is a machine-readable medium including code, when executed, to cause a machine to perform any of the methods described herein. The machine-readable storage or medium may be a non-transient storage or medium.

The examples as described herein may be summarized as follows:
Example 1 is a cable modem for transporting video traffic to a CPE. The cable modem comprises a receiver to receive IP packets from a network, a video extractor to extract video packets from a first set of IP packets, a video modulator to modulate the video packets per video format supported by a CPE, and a transmitter to transmit the modulated video packets to the CPE.

Example 2 is the cable modem of example 1, wherein out-of-band signaling transported between a network headend and the CPE passes through the cable modem.

Example 3 is the cable modem of example 1, further comprising a first IP bridge to extract downstream OOB messages from a second set of one or more IP packets, and an OOB modulator to modulate the downstream OOB messages per format supported by the CPE, wherein the modulated downstream OOB messages are transmitted to the CPE by the transmitter.

Example 4 is the cable modem of example 3, further comprising a tuner to receive upstream OOB signaling from the CPE, a demodulator to extract upstream OOB messages from the upstream OOB signaling, and a second IP bridge to generate IP packets for carrying the upstream OOB messages, wherein the IP packets for carrying the upstream OOB messages are transmitted to a network by the transmitter.

Example 5 is the cable modem of example 1, further comprising a DSG functionality to transport OOB messages to or from the CPE over IP.

Example 6 is the cable modem as in any one of examples 1-5, wherein the CPE is a STB connected to a TV.

Example 7 is the cable modem as in any one of examples 1-5, wherein the video packets are modulated per ITU-T Recommendation J.83.

Example 8 is the cable modem as in any one of examples 2-4, wherein the OOB messages are modulated per SCTE 55-1 or SCTE 55-2 standards.

Example 9 is the cable modem as in any one of examples 1-5, wherein the video packets are encoded in accordance with MPEG standards.

Example 10 is a processor for transporting video traffic to a CPE. The processor comprises a video extractor to extract video packets from a first set of IP packets received from a network, and a video modulator to modulate the video packet per video format supported by a CPE.

Example 11 is the processor of example 10, further comprising a first IP bridge to extract downstream OOB messages from a second set of IP packets, and an OOB modulator to modulate the downstream OOB messages per format supported by the CPE.

Example 12 is the processor of example 11, further comprising an OOB demodulator to demodulate upstream OOB signals received from the CPE to extract upstream OOB messages, and a second IP bridge to convert the upstream OOB messages to IP packets for carrying the upstream OOB messages.

Example 13 is the processor of example 10, further comprising a DSG functionality to transport OOB messages to or from the CPE over IP.

Example 14 is the processor as in any one of examples 10-13, wherein the CPE is a STB connected to a TV.

Example 15 is the processor as in any one of examples 10-13, wherein the video packets are modulated per ITU-T Recommendation J.83.

Example 16 is the processor as in any one of examples 11-12, wherein the OOB messages are modulated per SCTE 55-1 or SCTE 55-2 standards.

Example 17 is the processor as in any one of examples 10-13, wherein the video packets are encoded in accordance with MPEG standards.

Example 18 is a method for transporting video traffic to a CPE. The method comprises receiving IP packets from a network, extracting video packets from a first set of IP packets, modulating the video packets per video format supported by a CPE, and transmitting the modulated video packets to the CPE.

Example 19 is the method of example 18, further comprising transporting out-of-band messages between a network headend and the CPE.

Example 20 is the method of example 19, further comprising extracting downstream OOB messages from a second set of IP packets, modulating the downstream OOB messages per format supported by the CPE, and transmitting the modulated downstream OOB messages to the CPE.

Example 21 is the method of example 20, further comprising receiving upstream OOB signaling from the CPE, extracting upstream OOB messages from the upstream OOB signaling, generating IP packets for carrying the upstream OOB messages, and transmitting the IP packets for carrying the upstream OOB messages to a network.

Example 22 is the method of example 18, further comprising transporting OOB messages using a DSG functionality to or from the CPE over IP.

Example 23 is the method as in any one of examples 18-22, wherein the CPE is a STB connected to a TV.

Example 24 is the method as in any one of examples 18-22, wherein the video packets are modulated per ITU-T Recommendation J.83.

Example 25 is the method as in any one of examples 19-21, wherein the OOB messages are modulated per SCTE 55-1 or SCTE 55-2 standards.

Example 26 is the method as in any one of examples 18-22, wherein the video packets are encoded in accordance with MPEG standards.

Example 27 is an apparatus for transporting video traffic to a CPE. The apparatus comprises means for receiving IP packets from a network, means for extracting video packets from a first set of IP packets, means for modulating the video packets per video format supported by a CPE, and means for transmitting the modulated video packets to the CPE.

Example 28 is the apparatus of example 27, further comprising means for transporting out-of-band messages between a network headend and the CPE.

Example 29 is the apparatus of example 27, further comprising means for extracting downstream OOB messages from a second set of one or more IP packets, means for modulating the downstream OOB messages per format supported by the CPE, and means for transmitting the modulated downstream OOB messages to the CPE.

Example 30 is the apparatus of example 29, further comprising means for receiving upstream OOB signaling from the CPE, means for extracting upstream OOB messages from the upstream OOB signaling, means for generating IP packets for carrying the upstream OOB messages, and means for transmitting the IP packets for carrying the upstream OOB messages to a network.

Example 31 is the apparatus of example 27, further comprising means for transporting OOB messages using a DSG functionality to or from the CPE over IP.

Example 32 is the apparatus as in any one of examples 27-31, wherein the CPE is a STB connected to a TV.

Example 33 is the apparatus as in any one of examples 27-31, wherein the video packets are modulated per ITU-T Recommendation J.83.

Example 34 is the apparatus as in any one of examples 28-30, wherein the OOB messages are modulated per SCTE 55-1 or SCTE 55-2 standards.

Example 35 is the apparatus as in any one of examples 27-31, wherein the video packets are encoded in accordance with MPEG standards.

Example 36 is a machine-readable storage medium including codes, when executed, to cause a machine to perform a method for transporting video traffic to a CPE. The method comprises receiving IP packets from a network, extracting video packets from a first set of IP packets, modulating the video packets per video format supported by a CPE, and transmitting the modulated video packets to the CPE.

Example 37 is the machine-readable storage medium of claim 36, wherein the method further comprises extracting downstream OOB messages from a second set of IP packets, modulating the downstream OOB messages per format supported by the CPE, and transmitting the modulated downstream OOB messages to the CPE.

Example 38 is the machine-readable storage medium 37, wherein the method further comprises receiving upstream OOB signaling from the CPE, extracting upstream OOB messages from the upstream OOB signaling, generating IP packets for carrying the upstream OOB messages, and transmitting the IP packets for carrying the upstream OOB messages to a network.

Example 39 is the machine-readable storage medium 36, wherein the method further comprises transporting OOB messages using a DSG functionality to or from the CPE over IP.

Example 40 is the machine-readable storage medium as in any one of claims 36-39, wherein the CPE is a STB connected to a TV.

Example 41 is the machine-readable storage medium as in any one of claims 36-39, wherein the video packets are modulated per ITU-T Recommendation J.83.

Example 42 is the machine-readable storage medium as in any one of claims 36-39, wherein the OOB messages are modulated per SCTE 55-1 or SCTE 55-2 standards.

Example 43 is the machine-readable storage medium as in any one of claims 36-39, wherein the video packets are encoded in accordance with MPEG standards.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A cable modem for transporting video traffic to a customer premise equipment, CPE, (232a), the cable modem comprising:
a receiver to receive Internet protocol, IP, packets from a network;
a video extractor (806, 906) to extract video packets from a first set of IP packets;
a video modulator (814, 914) to modulate the video packets per video format supported by a CPE (232a); and
a transmitter to transmit the modulated video packets to the CPE (232a).

2. The cable modem of claim 1, wherein out-of-band signaling transported between a network headend and the CPE (232a) passes through the cable modem.

3. The cable modem of claim 1, further comprising:
a first IP bridge (808, 908) to extract downstream out-of-band, OOB, messages from a second set of one or more IP packets; and
an OOB modulator (810, 910) to modulate the downstream OOB messages per format supported by the CPE (232a),
wherein the modulated downstream OOB messages are transmitted to the CPE (232a) by the transmitter.

4. The cable modem of claim 3, further comprising:
a tuner (610, 710) to receive upstream OOB signaling from the CPE (232a);
a demodulator (816, 716) to extract upstream OOB messages from the upstream OOB signaling; and
a second IP bridge (818, 918) to generate IP packets for carrying the upstream OOB messages, wherein the IP packets for carrying the upstream OOB messages are transmitted to a network by the transmitter.

5. The cable modem of claim 1, further comprising:
a DOCSIS set-top gateway, DSG, functionality to transport out-of-band, OOB, messages to or from the CPE over IP.

6. A processor for transporting video traffic to a customer premise equipment, CPE, the processor comprising:
a video extractor (806, 906) to extract video packets from a first set of Internet protocol, IP, packets received from a network; and
a video modulator (814, 914) to modulate the video packet per video format supported by a CPE (232a).

7. The processor of claim 6, further comprising:
a first IP bridge (808, 908) to extract downstream out-of-band, OOB, messages from a second set of IP packets; and
an OOB modulator (810, 910) to modulate the downstream OOB messages per format supported by the CPE (232a).

8. The processor of claim 6, further comprising:
an OOB demodulator (816, 716) to demodulate upstream OOB signals received from the CPE (232a) to extract upstream OOB messages; and
a second IP bridge (818, 918) to convert the upstream OOB messages to IP packets for carrying the upstream OOB messages.

9. The processor of claim 6, further comprising:
a DOCSIS set-top gateway, DSG, functionality to transport out-of-band, OOB, messages to or from the CPE over IP.

10. The processor as in any one of claims 6-9, wherein the CPE is a set-top box, STB, connected to a TV.

11. A method for transporting video traffic to a customer premise equipment, CPE, the method comprising:
receiving Internet protocol, IP, packets from a network;
extracting video packets from a first set of IP packets;
modulating the video packets per video format supported by a CPE (232a); and
transmitting the modulated video packets to the CPE (232a).

12. The method of claim 11, further comprising:
transporting out-of-band messages between a network headend and the CPE (232a).

13. The method of claim 12, further comprising:
extracting downstream out-of-band, OOB, messages from a second set of IP packets;
modulating the downstream OOB messages per format supported by the CPE; and
transmitting the modulated downstream OOB messages to the CPE (232a).

14. The method of claim 13, further comprising:
receiving upstream OOB signaling from the CPE (232a);
extracting upstream OOB messages from the upstream OOB signaling;
generating IP packets for carrying the upstream OOB messages; and
transmitting the IP packets for carrying the upstream OOB messages to a network.

15. The method of claim 11, further comprising:
transporting out-of-band, OOB, messages using a DOCSIS set-top gateway, DSG, functionality to or from the CPE (232a) over IP.
